# EUROPÄISCHE PATENTSCHRIFT

(11) **EP 0 922 872 B1**
(45) Veröffentlichungstag und Bekanntmachung des Hinweises auf die Patenterteilung: **29.08.2001**
(21) Anmeldenummer: 98121630.2
(22) Anmeldetag: 12.11.1998
(51) Int. Cl.: F16D 28/00, F16D 21/04

(54) **Schalteinrichtung für Schaltgetriebe**
Shift device for transmission
Dispositif de changement de vitesses pour boite de vitesses

(30) Priorität: 11.12.1997 DE 19754966
(43) Veröffentlichungstag der Anmeldung: 16.06.1999
(73) Patentinhaber: Bayerische Motoren Werke Aktiengesellschaft, 80788 München (DE)
(72) Erfinder: Seidl, Josef, 84130 Dingolfing (DE)

(56) Entgegenhaltungen:
- EP-A- 0 342 264
- EP-A- 0 377 145
- EP-A- 0 609 438
- DE-A- 3 842 397
- DE-A- 19 627 145
- US-A- 4 982 617
- PATENT ABSTRACTS OF JAPAN vol. 1997, no. 05, 30. Mai 1997 (1997-05-30) & JP 09 014299 A (RICOH CO LTD), 14. Januar 1997 (1997-01-14)

## Beschreibung

Die Erfindung betrifft eine Schalteinrichtung für Schaltgetriebe, umfassend eine erste Welle, auf der mehrere Ritzel von unterschiedlichem Durchmesser drehbar gelagert sind, die mit Ritzeln kämmen, die auf einer zweiten Welle drehfest angeordnet sind, und Koppelelemente, mit denen wahlweise eines der drehbaren Ritzel mit der ersten Welle drehfest kuppelbar ist, wobei jedem der drehbaren Ritzel ein verformbares Koppelelement zugeordnet ist, das so bemessen ist, dass es in Abhängigkeit vom Verformungszustand eine ungehinderte Verdrehung des entsprechenden Ritzels gegenüber der Welle erlaubt oder dieses Ritzel mit der Welle kraftschlüssig verbindet.

Es ist bereits eine Schalteinrichtung bekannt, bei der das Koppelelement als Ziehkeil ausgebildet ist. Diese Schalteinrichtung wird deshalb auch als Ziehkeilschaltung bezeichnet. Der in der Welle axial verschiebbar gelagerte Ziehkeil kann mit einem der drehbar gelagerten Ritzel formschlüssig in Eingriff gebracht werden, um dieses Ritzel mit der Welle drehfest zu verbinden. Ein solches herkömmliches Getriebe mit Ziehkeilschaltung ist mit mehreren Nachteilen behaftet. Einem verhältnismäßig kleinen übertragbaren Drehmoment steht eine große Baulänge gegenüber. Ein weiterer Nachteil ist das laute Geräusch, das entsteht, wenn der Ziehkeil beim Schalten mit dem gewünschten Ritzel in Eingriff gebracht wird. Durch dieses formschlüssige Verbinden des Ziehkeils mit dem gewünschten Ritzel wird im übrigen auch die Sicherheit des Schaltvorgangs beeinträchtigt.

Aus der US-A-4 982 617 ist auch bereits eine Schalteinrichtung der eingangs genannten Bauart bekannt. Bei dieser bekannten Schalteinrichtung ist das Koppelelement als hydraulische Klemmhülse ausgebildet. Die Klemmhülse ist auf einer Welle drehfest angeordnet und steht über eine Wellenbohrung und entsprechende Steuerventile mit einer Hydraulikpumpe in Verbindung. Eine solche Schalteinrichtung arbeitet zwar geräuscharm, die Steuerventil und die Hydraulikpumpe sind aber verhältnismäßig kostspielig und auch störungsanfällig, da sie bewegliche Teile umfassen.

Aus PATENT ABSTRACTS OF JAPAN vol. 1977, no. 05, 30. Mai 1997 (1997-05-30) & JP 09 014299 A ist bereits eine piezoelektrische Wellenkupplung bekannt, umfassend ein oder mehrere piezoelektrische Elemente, die am Innenumfang einer mit einer ersten Welle verbundenen Hohlnabe angeordnet und nach Anlegen einer Spannung mit dem Außenumfang einer an einer zweiten Welle befestigten Scheibe reibschlüssig in Verbindung gelangen, wobei ein koaxialer Zustand der beiden Wellen beibehalten wird.

Der Erfindung liegt die Aufgabe zugrunde, eine gattungsgemäße Schalteinrichtung zu schaffen, die sich bei geringer Baulänge durch ein großes übertragbares Moment auszeichnet und die einen nahezu geräuschlosen Schaltvorgang mit großer Schaltsicherheit ermöglicht.

Erfindungsgemäß wird diese Aufgabe mit einer gattungsgemäßen Schalteinrichtung gelöst, die dadurch gekennzeichnet ist, dass jedes Koppelelement aus einem piezoelektrischen Material besteht, das sich beim Anlegen eines elektrischen Feldes ausdehnt, dass jedes Koppelelement eine zwischen einer äußeren Umfangsfläche der ersten Welle und einer inneren Umfangsfläche des zugeordneten Ritzels angeordnete Hülse und/oder ein zwischen einer Ringschulter der Welle und einer Seitenfläche des zugeordneten Ritzels angeordneter Ring ist, und dass wahlweise an eines der Koppelelemente eine Spannung anlegbar ist.

Die Erfindung macht sich den Umstand zunutze, daß die Dielektrizitätszahl nichtleitender Stoffe von ihrer Dichte, also von dem Druck, unter dem sie stehen, abhängig ist. Die Dielektrizitätszahl kann mit der Dichte zu- oder abnehmen. Diejenigen Stoffe, bei denen sie zunimmt, ziehen sich beim Anlegen eines elektrischen Feldes zusammen, während sie sich im anderen Fall ausdehnen. Diese als Elektrostriktion bezeichnete Erscheinung ist im allgemeinen zum Quadrat der Feldstärke proportional, also unabhängig von der Feldrichtung. Materialien, bei denen die Elektrostriktion besonders deutlich ausgeprägt ist, werden üblicherweise als piezoelektrische Materialien bezeichnet. Für den Einsatz bei der erfindungsgemäßen Schalteinrichtung ist ein Keramikmaterial als piezoelektrisches Material für das Koppelelement besonders geeignet.

Wenn sich das aus einem piezoelektrischen Material bestehende Koppelelement im entsprechenden Spannungszustand ausdehnt, dann übt es auf die Welle und das mit dieser zu kuppelnde Ritzel eine Klemmkraft aus, so daß es zu einer kraftschlüssigen Verbindung kommt. Wegen dieser kraftschlüssigen Verbindung kann bei einer verhältnismäßig kleinen Baulänge ein großes Drehmoment übertragen werden. Diese kraftschlüssige Verbindung kann praktisch geräuschlos und mit großer Sicherheit herbeigeführt werden.

Die kraftschlüssige Verbindung zwischen der Welle und dem gewünschten Ritzel kann durch eine radiale oder durch eine axiale Ausdehnung des Koppelelements oder durch eine Kombination hiervon bewirkt werden.

Einige Ausführungsbeispiele der Erfindung sind in der Zeichnung dargestellt und werden nachfolgend näher erläutert. Es zeigt:
Fig. 1 einen schematischen Längsschnitt durch eine erste Ausführungsform einer Schalteinrichtung für Schaltgetriebe,
Fig. 2 einen schematischen Längsschnitt durch eine zweite Ausführungsform einer Schalteinrichtung und
Fig. 3 einen schematischen Längsschnitt durch eine dritte Ausführungsform einer Schalteinrichtung.

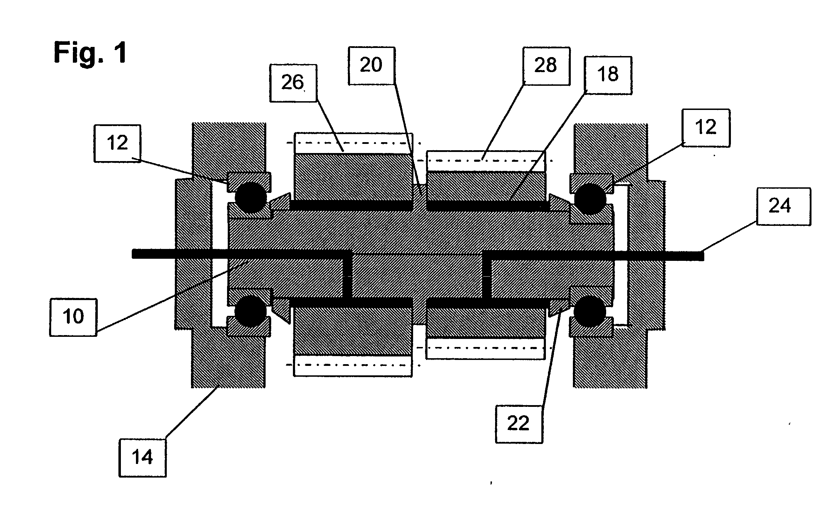

Die in Fig. 1 gezeigte Schalteinrichtung für Schaltgetriebe umfaßt eine Welle 10, die mit Kugellagern 12 in einem Gehäuse 14 drehbar gelagert ist. Auf der Welle 10 sind zwei Hülsen 18 drehfest angeordnet. Die beiden Hülsen 18 liegen innen an einem radial vorspringendem Bund 20 der Welle an. An den äußeren Enden der beiden Hülsen 18 liegt ein Sicherungsring 22 an, der auf die Welle 10 aufgeschrumpft ist. Der Sicherungsring 22 kann auch auf andere Weise mit der Welle 10 verbunden sein, es kommt nur darauf an, daß er gegen eine axiale Verlagerung gesichert ist. Im Zentrum der Welle 10 befinden sich zwei Stromzuführungen 24, die mit jeweils einer Hülse 18 und mit dem Pluspol einer (nicht gezeigten) Batterie verbunden sind. Auf den beiden Hülsen 18 sind zwei Ritzel 26, 28 mit unterschiedlichem Durchmesser drehbar gelagert. Die beiden Ritzel 26, 28 sind durch den Bund 20 der Welle 10 und durch die beiden Sicherungsringe 22 in ihrer Axiallage gesichert. Jedes der beiden Ritzel 26, 28 kämmt mit einem (nicht gezeigten) zugeordneten Ritzel, das auf einer (gleichfalls nicht gezeigten) Welle drehfest angeordnet ist, bei der es sich um eine antreibende oder abtreibende Welle handeln kann. Die beiden Hülsen 18 bestehen aus einem piezoelektrischen Keramikmaterial, das sich beim Anlegen eines elektrischen Feldes ausdehnt. Im Normalzustand der Hülse 18, das heißt wenn kein elektrisches Feld angelegt ist, kann sich das zugeordnete Ritzel 26 bzw. 28 auf der Hülse 18 frei drehen.

Die mit den beiden Ritzeln 26, 28 kämmenden (nicht gezeigten) Ritzel sind über die zugeordnete Welle und das Gehäuse 14 mit dem Minuspol einer (nicht gezeigten) Batterie verbunden.

Wenn das Getriebe in eine gewünschte Gangstufe geschaltet werden soll, in der beispielsweise das Ritzel 26 mit der Welle 10 drehfest verbunden sein soll, dann wird an die zugeordnete Hülse 18 ein elektrisches Feld angelegt. Genauer gesagt es wird ein Schalter betätigt, um die zu dem Ritzel 26 gehörige Hülse 18 über die Stromzuführung 24 mit dem Pluspol der Batterie zu verbinden. Unter dem Einfluß des elektrischen Feldes dehnt sich die Hülse 18 radial aus, so daß eine kraftschlüssige Verbindung des Ritzels 26 mit der Welle 10 eintritt. Die durch die radiale Ausdehnung der Hülse 18 bewirkte Klemmkraft ist ausreichend, um ein großes Drehmoment zwischen der Welle 10 und dem Ritzel 26 zu übertragen. Wenn in die andere Gangstufe geschaltet werden soll, dann wird die elektrische Verbindung zwischen der dem Ritzel 26 zugeordneten Hülse 18 und dem Pluspol der Batterie unterbrochen, und es wird an die dem anderen Ritzel 28 zugeordnete Hülse eine Spannung angelegt. Infolgedessen kann sich das Ritzel 26 auf der Welle 10 frei verdrehen, wohingegen das andere Ritzel 28 mit der Welle drehfest verbunden ist.

Während bei der in Fig. 1 gezeigten ersten Ausführungsform die drehfeste Verbindung zwischen dem ausgewählten Ritzel 26 oder 28 und der Welle 10 durch eine radiale Aufweitung der zugeordneten Hülse 18 bewirkt wird, ist dies auch durch eine axiale Aufweitung eines aus einem piezoelektrischen Material bestehenden Koppelelements möglich.

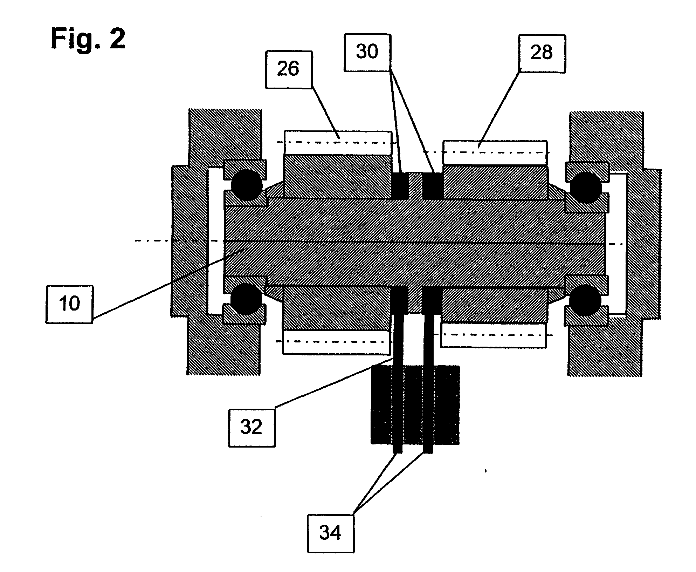

Die in Fig. 2 gezeigte Ausführungsform unterscheidet sich von der in Fig. 1 gezeigten Ausführungsform im wesentlichen dadurch, daß die beiden Ritzel 26, 28 unmittelbar auf der Welle 10 drehbar gelagert sind und daß zwischen jedem Ritzel und dem zentralen Bund 20 der Welle 10 ein Ring 30 aus einem piezoelektrischen Material angeordnet ist. Der Ring 30 kann ebenso wie die Hülse 18 aus einem Keramikmaterial bestehen, das sich beim Anlegen eines elektrischen Feldes ausdehnt. Jedem der beiden Ringe 30 ist ein eigener Schleifkontakt 32 zugeordnet, der über eine Stromzuführung 34 mit dem Pluspol einer (nicht gezeigten) Batterie verbunden werden kann. Ähnlich wie bei der ersten Ausführungsform ist in jeder Stromzuführung 34 ein Schalter angeordnet, um die Verbindung mit dem Pluspol der Batterie herzustellen bzw. zu unterbrechen. Die den beiden Stromzuführungen 34 zugeordneten Schalter können zwangsweise so gekuppelt sein, daß einer von ihnen geöffnet wird, wenn der andere geschlossen wird. Jeder der beiden Ringe 30 hat eine solche Breite, daß er die Verdrehung des zugeordnete Ritzels 26 oder 28 gegenüber der Welle 10 nicht behindert, wenn er sich im nicht aktivierten Zustand befindet. Wenn jedoch durch Schließen des entsprechenden Schalters über die Stromzuführung 34 und den Schleifkontakt 32 an einen der beiden Ringe 30 eine Spannung angelegt wird, dann dehnt er sich axial aus. Das zugeordnete Ritzel 26 oder 28 wird daher zwischen dem axial aufgeweiteten Ring 30 und dem gegenüberliegenden Sicherungsring 22 reibschlüssig gehalten. Die dabei erzielte Klemmkraft ist ausreichend, um auch größere Drehmomente zwischen der Welle und dem Ritzel zu übertragen.

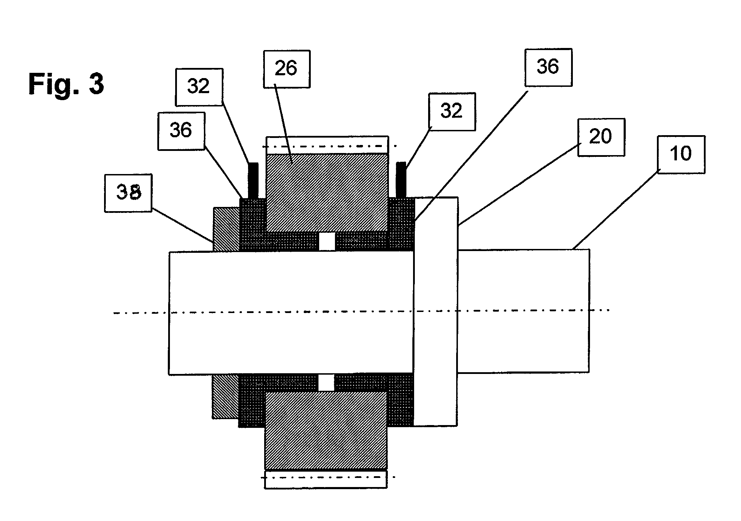

Die in Fig. 3 gezeigte dritte Ausführungsform stellt gewissermaßen eine Kombination der ersten und der weiten Ausführungsform dar. Das jedem Ritzel zugeordnete Koppelelement umfaßt zwei spiegelbildlich angeordnete Bundringe 36 mit L-förmigem Querschnitt. Die beiden Bundringe 36 aus einem piezoelektrischen Material sind zwischen dem zentralen Bund 20 der Welle 10 und einem Sicherungsring 38 angeordnet. Jedem Bundring 36 ist ein Schleifkontakt 32 zugeordnet. Die beiden Schleifkontakte 32 können wie bei der zweiten Ausführungsform über einen (nicht gezeigten) Schalter mit dem Pluspol einer Batterie verbunden werden. Wenn dieser Schalter geschlossen und demzufolge an die beiden Bundringe 36 eine Spannung angelegt wird, dann dehnen sie sich sowohl in radialer wie auch in axialer Richtung aus. Das zugeordnete Ritzel 26 wird daher sowohl in radialer als auch in axialer Richtung mit der Welle 10 formschlüssig verspannt. Zwischen dem Ritzel 26 und der Welle 10 kann daher ein noch größeres Drehmoment übertragen werden. Es ist erkennbar, daß in der gleichen Weise eine kraftschlüssige Verbindung zwischen dem in Fig. 3 nicht gezeigten anderen Ritzel und der Welle 10 erreicht werden kann.

Bei allen drei Ausführungsformen wird das ausgewählte Ritzel 26 oder 28 nicht schlagartig mit der Welle 10 drehfest gekuppelt, sondern es kommt infolge der reibschlüssigen Verbindung zu einem Schlupf. Der Schaltvorgang kann daher weich und geräuschlos durchgeführt werden. Die bei dem anfänglichen Schlupf entstehende Reibungswärme kann problemlos abgeführt werden, weil solche Schalteinrichtungen üblicherweise in einem Ölbad laufen.

Für den Fachmann ist erkennbar, daß die vorstehend beschriebenen drei Ausführungsformen einer Schalteinrichtung sowohl bei gerad- als auch bei schrägverzahnten Zahnrädern anwendbar sind.

Weiter ist es möglich, die erforderlichen Plus und Minus Kontakte beide direkt an den Elementen 18, 30, 36 anzubringen.

### Bezugszeichenliste:

- 10: Welle
- 12: Kugellager
- 14: Gehäuse
- 18: Hülse
- 20: Bund
- 22: Sicherungsring
- 24: Stromzuführung
- 26: Ritzel
- 28: Ritzel
- 30: Ring
- 32: Schleifkontakt
- 34: Stromzuführung
- 36: Bundringe
- 38: Sicherungsring

## Patentansprüche

1. Schalteinrichtung für Schaltgetriebe, umfassend eine erste Welle, auf der mehrere Ritzel von unterschiedlichem Durchmesser drehbar gelagert sind, die mit Ritzeln kämmen, die auf einer zweiten Welle drehfest angeordnet sind, und Koppelelemente, mit denen wahlweise eines der drehbaren Ritzel mit der ersten Welle drehfest kuppelbar ist, wobei jedem der drehbaren Ritzel (26, 28) ein verformbares Koppelelement (18; 30; 36) zugeordnet ist, das so bemessen ist, dass es in Abhängigkeit vom Verformungszustand eine ungehinderte Verdrehung des entsprechenden Ritzels (26, 28) gegenüber der Welle (10) erlaubt oder dieses Ritzel mit der Welle kraftschlüssig verbindet, **dadurch gekennzeichnet,** dass jedes Koppelelement (18; 30; 36) aus einem piezoelektrischen Material besteht, das sich beim Anlegen eines elektrischen Feldes ausdehnt, dass jedes Koppelelement eine zwischen einer äußeren Umfangsfläche der ersten Welle (10) und einer inneren Umfangsfläche des zugeordneten Ritzels (26, 28) angeordnete Hülse (18) und/oder ein zwischen einer Ringschulter (20) der Welle (10) und einer Seitenfläche des zugeordneten Ritzels (26, 28) angeordneter Ring (30) ist, und dass wahlweise an eines der Koppelelemente (18; 30; 36) eine Spannung anlegbar ist.

2. Schalteinrichtung nach Anspruch 1, **dadurch gekennzeichnet,** dass die Hülse (18) und/oder der Ring (30) auf der Welle (10) drehfest angeordnet ist.

3. Schalteinrichtung nach Anspruch 1 oder 2, **dadurch gekennzeichnet,** dass die Hülse (18) über eine in der Welle (10) angeordnete Stromzuführung (24) mit dem Pluspol einer Batterie verbindbar ist, und dass die Ritzel (26, 28) mit dem Minuspol der Batterie in Verbindung stehen.

4. Schalteinrichtung nach Anspruch 2, **dadurch gekennzeichnet,** dass der Ring (30) über einen Schleifkontakt (32) mit dem Pluspol einer Batterie verbindbar ist, und dass die Ritzel (26, 28) mit dem Minuspol der Batterie in Verbindung stehen.

5. Schalteinrichtung nach einem der Ansprüche 1 bis 4, **dadurch gekennzeichnet**, dass das piezoelektrische Material ein Keramikmaterial ist.

6. Schalteinrichtung nach einem der Ansprüche 1 bis 5, **dadurch gekennzeichnet,** dass beide Kontakte am piezoelektrischen Material angreifen.

## Claims

1. A shift means for gear shift mechanisms comprising a first shaft on which a number of different-diameter pinions are mounted for rotation and mesh with pinions mounted non-rotatably on a second shaft, and also comprising coupling elements for coupling a selected one of the rotatable pinions non-rotatably to the second shaft, wherein each rotatable pinion (26, 28) is associated with a deformable coupling element (18; 30; 36) dimensioned so that, depending on its state of deformation, it allows the respective pinion (26, 28) to rotate relative to the shaft (10) without hindrance or non-positively connects the said pinion to the shaft, **characterised in that** each coupling element (18; 30; 36) is made of a piezoelectric material which expands on application of an electric field, each coupling element is a sleeve (18) disposed between an outer peripheral surface of the first shaft (10) and an inner peripheral surface of the associated pinion (26, 28) and/or a ring (30) disposed between an annular shoulder (20) on the shaft (10) and a side surface of the associated pinion (26, 28), and a voltage can be applied to a selected one of the coupling elements (18; 30; 36).

2. A shift means according to claim 1, **characterised in that** the sleeve (18) and/or the ring (30) is non-rotatably disposed on the shaft (10).

3. A shift means according to claim 1 or claim 2, **characterised in that** the sleeve (18) can be connected via a power supply (24) disposed in the shaft (10) to the positive terminal of a battery, and the pinions (26; 28) are connected to the negative terminal of the battery.

4. A shift means according to claim 2, **characterised in that** the ring (30) can be connected via a sliding contact (32) to the positive terminal of a battery, and the pinions (26; 28) are connected to the negative terminal of the battery.

5. A shift means according to any of claims 1 to 4, **characterised in that** the piezoelectric material is a ceramic material.

6. A shift means according to any of claims 1 to 5, **characterised in that** both contacts engage the piezoelectric material.

## Revendications

1. Dispositif de changement de vitesse pour boîte de vitesses, dans lequel :
- sur un premier arbre, sont montés tournants plusieurs pignons de diamètres différents, engrenant avec des pignons montés avec solidarité en rotation sur un deuxième arbre,
- des éléments d'accouplement peuvent au choix rendre un des pignons montés tournants sur le premier arbre solidaire en rotation de cet arbre, et
- à chacun des pignons tournants (26, 28) est associé un élément d'accouplement déformable (18; 30 ; 36) dimensionné de manière telle qu'en fonction de son état de déformation, il permet au pignon correspondant (26, 28) de tourner sans entrave par rapport à l'arbre (10) ou verrouille celui-ci, par friction sur cet arbre,
**caractérisé en ce que**
- chaque élément d'accouplement (18 ; 30 ; 36) est fait d'un matériau piézoélectrique qui se dilate quand on lui applique un champ électrique,
- chaque élément d'accouplement est constitué par une douille (18) montée entre une portée périphérique externe du premier arbre (10) et une portée périphérique interne du pignon (26, 28) associé, et/ou par une bague (30) montée entre un épaulement annulaire (20) de l'arbre (10) et une portée latérale du pignon associé (26, 28), et
- une tension peut être appliquée, au choix, à un des éléments d'accouplement (18 ; 30 ; 36).

2. Dispositif selon la revendication 1,
**caractérisé en ce que**
la douille (18) et/ou la bague (30) est montée sur l'arbre (10), avec solidarité en rotation.

3. Dispositif selon la revendication 1 ou 2,
**caractérisé en ce que**
la douille (18) peut être reliée au pôle plus d'une batterie, par une amenée de courant (24) située dans l'arbre (10), tandis que les pignons (26, 28) sont reliés au pôle moins de la batterie.

4. Dispositif selon la revendication 2,
**caractérisé en ce que**
la bague (30) peut être reliée par un contact glissant (32) au pôle plus d'une batterie tandis que les pignons (26, 28) sont reliés au pôle moins de la batterie.

5. Dispositif selon l'une quelconque des revendications 1 à 4,
**caractérisé en ce que**
le matériau piézoélectrique est une céramique.

6. Dispositif selon l'une des revendications 1 à 5,
**caractérisé en ce que**
les deux contacts sont en prise avec le matériau piézoélectrique.
